# EUROPEAN PATENT APPLICATION

(11) **EP 1 887 341 A1**
(43) Date of publication of application: **13.02.2008**
(21) Application number: 06015991.0
(22) Date of filing: 01.08.2006
(51) Int. Cl.: G01N 17/00

(54) **Method and system for producing stress corrosion cracking**

(71) Applicant: Institute of Nuclear Energy Research Atomic Energy Council, Executive Yuan, Taoyuan County 32546 Taiwan (CN)
(72) Inventor: Yu, Ming-Sheng, Da-an District Taipei City, 106 (TW); Hsu, Hsui-Pei, Taoyuan County 330 (TW); Wu, Yam-Hui, Zhongli City Taoyuan County 320 (TW); Hwang, Yun-Hwa, Yangmei Town Taoyuan County 326 (TW)
(74) Representative: Negendanck, Matthias

(57) **Abstract**

A method and system for producing stress corrosion cracking (SCC) is disclosed, wherein the method is employed to cause the inner wall of a tube specimen to generate stress corrosion cracks while applying a pressure difference and a temperature difference between the inner and outer walls of the tube specimen. The system of the invention comprises: a tube, having an enclosed space formed therein for receiving a solution; and a heating apparatus, capable of heating the tube continuously until the outer wall of the tube reaches a specific operating temperature; wherein the inner wall of the tube is subjected to a specific operating pressure while the outer wall of the tube is maintained at the specific operating temperature by the heating apparatus. The present invention can accelerate stress corrosion cracks to be generated on a specific tube by means of manual simulation, so that the evaluation of crack depth on the inner wall of a tube through the testing of tube specimens with stress corrosion cracking, which is made out of the specific tube, can be improved on both inspection reliability and accuracy.

## Description

### FIELD OF THE INVENTION

The present invention relates to a system for producing stress corrosion cracking (SCC), and more particularly, to a SCC system capable of causing the inner wall of a tube specimen to generate crevices while applying a pressure difference and a temperature difference between the inner and outer walls of the tube specimen

### BACKGROUND OF THE INVENTION

Steam generator (S/G) tubing plays a significant role in the safety of nuclear power plant since it is an important radiation shielding for pressure water reactor. The failure of the S/G tubing and the subsequent leakage of coolant will affect the operation efficiency of the nuclear power plant as well as the safety concern of the public. In general, the operations of ageing evaluation, degradation monitoring, plugging maintenance, and life prediction of S/G tubing are executed by every power plant for ensuring the safe operation of steam generator (S/G). Since the degradation of S/G tubing is inevitable with the increasing of operation period, it is important to have means capable of accurately measuring the crevice type and depth formed on the S/G tubing as well as the crack growth rates with respect to various crevice depth, such that a feasible degradation management strategy for maintaining S/G tubing can be established. By the experimental data obtained from the production of stress corrosion cracks on a tube specimen, the crevice type and depth of a S/G tubing can be better evaluate and measured.

Conventionally, the calibration curve for a non-destructive inspection of S/G tubing is established by the use of crevices formed by electro-discharge machining (EDM) technique. However, the conventional calibration curve is not accurate that it is prone to cause some uncertainty in the non-destructive inspection for measuring crack size, since the crevices formed by the electro-discharge machining (EDM) technique are different to typical stress corrosion cracks in many aspect. Therefore, it is important to have a method capable of simulating the formation of stress corrosion cracks on a tube specimen so as to use the simulation result for establishing an accurate calibration curve.

In view of the above description, it is in need of a system capable of producing stress corrosion cracking, by which the SCC degradation of a tube specimen happening in primary water environment of a simulated S/G system can be employed as a basis for measuring, recording and calculating carck growth rates in length as well as in depth.

### SUMMARY OF THE INVENTION

It is the primary object of the present invention to provide a method capable of producing stress corrosion cracks on a tube specimen simulating the formation of crevices on the inner wall of stream generator (S/G) tubing.

It is another object of the invention to provide a calibration curve of stress corrosion cracking basing on the various depth distributions of different tube specimens.

To achieve the above objects, the present invention provides a system for producing stress corrosion cracking, which comprises: a tube, having a first enclosed space formed therein for receiving a first reaction solution; and a heating apparatus, capable of heating the tube continuously until the outer wall of the tube reaches and maintains at a first operating temperature; wherein the inner wall of the tube is subjecting to a first operating pressure while the outer wall of the tube is maintaining at the first operating temperature by the heating apparatus.

The heating apparatus further comprises a temperature controller and a temperature sensor, wherein the temperature controller is capable of controlling the temperature of the outer wall of the tube for maintaining the same at the first operating temperature; and the temperature sensor is used to measure the temperature of the outer wall of the tube.

Preferably, the first enclosed space is formed as the tube is connected to a first tube, whereas a pressure relief device and a pressure gauge are arranged at the first tube while the two opening ends of the tube is welded to seal respectively by two plugs. The plug sealing the top opening of the tube has a through hole for enabling the first tube to connect to the tube thereby. In addition, a protective means is arranged between the tube and the heating apparatus while enabling outside of the tube to be wrapped thereby. In a preferred aspect, the protective means is a stainless steel tube.

Preferably, the tube is made of Inconel 600 nickel alloy; the first operating temperature is about 350 °C; and the first operating pressure is about 1200 psi. Moreover, the first reaction solution is a strong alkali solution, which can be formed by adding 300 grams of *Cu*₂*O* per liter in a 40 % NaOH solution.

In another preferred aspect, to achieve the above object, the present invention provides a system for producing stress corrosion cracking, which comprises: a tube, having a first enclosed space formed therein for receiving a first reaction solution; a tank, having a second enclosed space formed therein for receiving a second reaction solution; a fixing apparatus, for fixing the tube while exerting an axial stress on the same; and a heating apparatus, capable of heating the tank continuously until the outer wall of the tube reaches and maintains at a first operating temperature; wherein the inner walls of the tube and the tank are respectively subjecting to a first and a second operating pressures while the outer wall of the tube is maintaining at the first operating temperature by the heating apparatus.

The heating apparatus further comprises a temperature controller and a temperature sensor, wherein the temperature controller is capable of controlling the temperature of the outer wall of the tube for maintaining the same at the first operating temperature; and the temperature sensor is used to measure the temperature of the second reaction solution. It is noted that the temperature of the second reaction solution is the same as that of the outer wall of the tube.

The fixing apparatus further comprises a fixation frame and a locking device, wherein the fixation frame is used to fix and fasten the tube; and the locking device is used to press on the tube for exerting a desired axial stress thereon.

Preferably, the first enclosed space is formed as the tube is connected to a first tube while the second enclosed space is formed as the tank is connected to a second tube, whereas a first pressure relief device and a first pressure gauge are arranged at the first tube as well as a second pressure relief device and a second pressure gauge are arranged at the second tube, while the two opening ends of the tube is welded to seal respectively by two plugs. The plug sealing the top opening of the tube has a through hole for enabling the first tube to connect to the tube thereby.

Preferably, the tube is made of Inconel 600 nickel alloy; the first operating temperature is about 300 °C ; and the first operating pressure is about 400 psi while the second operating pressure is about 1250 psi. Moreover, the tank is a stainless steel tank capable of resisting high temperature and high pressure; the second reaction solution is a deionized water; and the first reaction solution is a strong alkali solution, which can be formed by adding 300 grams of *Cu₂O* per liter in a 40 % NaOH solution.

To sum up, the present invention provides a system capable of simulating the formation of stress corrosion cracking on a tube specimen so as to use the simulation result for establishing an accurate calibration curve, such that a more accurate experimental data, compared to prior arts, can be obtained for achieving a better evaluation and measurement of crevices formed on the inner wall of a tube.

Other aspects and advantages of the present invention will become apparent from the following detailed description, taken in conjunction with the accompanying drawings, illustrating by way of example the principles of the present invention.

### BRIEF DESCRIPTION OF THE DRAWINGS

FIG. 1 is a schematic diagram depicting steps of a method for producing stress corrosion cracking according to the present invention.

FIG. 2 is a schematic diagram showing a system for producing stress corrosion cracking according to a first preferred embodiment of the present invention.

FIG. 3 is a schematic diagram showing a system for producing stress corrosion cracking according to a second preferred embodiment of the present invention.

FIG. 4 shows a fixation frame of FIG. 3.

### DESCRIPTION OF THE PREFERRED EMBODIMENT

For your esteemed members of reviewing committee to further understand and recognize the fulfilled functions and structural characteristics of the invention, several preferable embodiments cooperating with detailed description are presented as the follows.

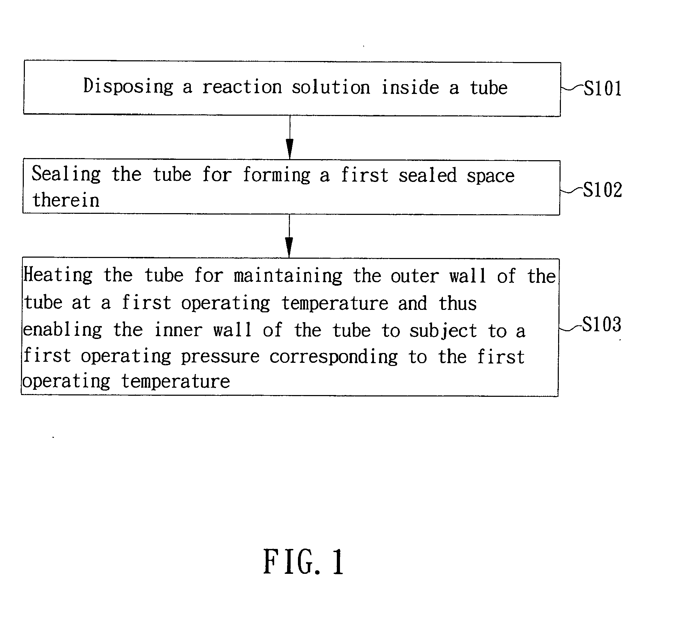

Please refer to FIG. 1, which is a schematic diagram depicting steps of a method for producing stress corrosion cracking according to the present invention. The flow starts at step S101. At step S101, a first reaction solution is disposed inside a tube, and then the flow proceeds to step S102. At step S102, the tube is sealed to form a first enclosed space inside the tube, and then the flow proceeds to step S103. Finally, at step S103, the outer wall of the tube is heated and maintained at a first operating temperature and correspondingly enabling the inner wall of the tube to subject to a first operating pressure while the outer wall of the tube is maintained at the first operating temperature.

In a preferred aspect, at step S103, an axial stress is applied on the tube while the tube is disposed inside a tank containing a second reaction solution; thereafter, the tank is heated for maintaining the interior temperature thereof at a second operating temperature while correspondingly maintaining a second operating pressure inside the tank, and thus the temperature of the tube can be raised by absorbing thermal energy from the heated second reaction solution.

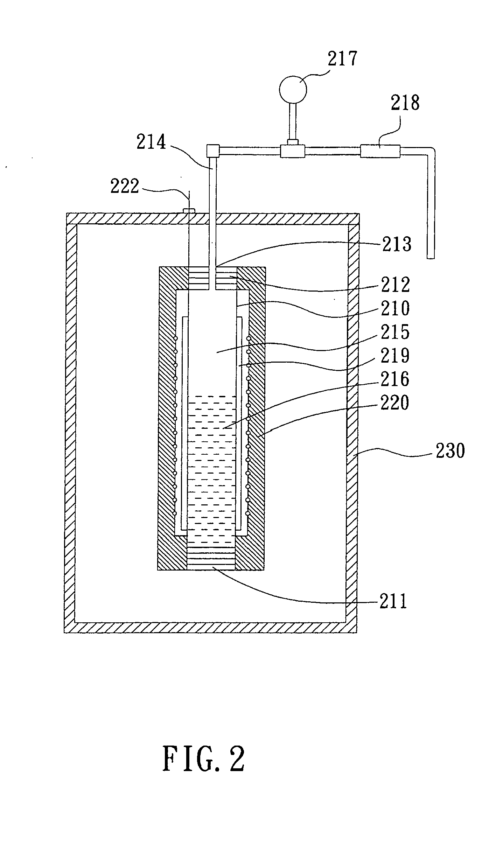

Please refer to FIG. 2, which is a schematic diagram showing a system for producing stress corrosion cracking according to a first preferred embodiment of the present invention. The tube 210 can be substantially an Inconel 600 nickel alloy tube, which is sealed by two plugs 211, 212 respectively welded at the bottom opening and the top opening of the tube 210, wherein the two plugs 211, 212 are made of a material the same as that of the tube 210. As seen in FIG. 2, a through hole 213 is formed on the plug 212 so that a tube with smaller diameter 214 can be inserted into the through hole 213 while tightly connected to the same. As the tube 210 is connected to the tube 214 by inserting the tube 214 into the through hole 213, an enclosed space 215 is formed inside the tube 210, which is used to accommodate a reaction solution 216 for facilitating stress corrosion cracks to form on the inner wall of the tube 210. In a preferred aspect, the reaction solution 216 can be a strong alkali solution, which can be formed by adding 300 grams of *Cu*₂*O* per liter in a 40 % NaOH solution.

Furthermore, a pressure relief device 218 and a pressure gauge 217 are arranged at the tube 214, that the pressure gauge 217 is used to measure the internal pressure of the tube 210, while the pressure relief device 218 is used to rapidly release the internal pressure of the tube so as to prevent the rupture of the tube 210. It is noted that the pressure relief device 218, being substantially a rupture disc, can break automatically while the internal pressure of the tube 210 exceeds a specific limit so that the internal pressure of the tube is decreased.

The heating apparatus 220 is used for heating the tube continuously until the outer wall of the tube reaches and maintains at a first operating temperature, i.e. about 350 °C. As the volume enclosed inside the tube remain unchanged, the internal pressure of the tube 210 is increased with the raising of the internal temperature of the tube 210, such that the internal pressure of the tube 210 will reach and maintain at a first operating pressure, i.e. about 1200 psi, while the temperature of the tube is maintained at the first operating temperature. Under the circumstance, as the temperature of the outer wall of the tube 210 is slightly higher than that of the inner wall of the tube while the internal pressure of the tube 210 is higher than its external pressure, i.e. the atmospheric pressure of about 14.7 psi, the inner wall of the tube will be subjected to certain stress for enabling axial crevices to occur on the tube 210.

In addition, a protective means 219 is arranged between the tube 210 and the heating apparatus 220 while enabling outside of the tube 210 to be wrapped thereby, that the preventive means can be a cylinder capable of receiving the tube 210 therein. In a preferred aspect, the protective means is a stainless steel tube, which is used for preventing the dissipating of thermal energy and maintaining the integrity of heating apparatus as Inconel 600 tubing ruptures. Moreover, the heating apparatus 220 further comprises a temperature controller and a temperature sensor 222, wherein the temperature controller is capable of controlling the temperature of the outer wall of the tube 210 for maintaining the same at the first operating temperature; and the temperature sensor 222 is used to measure the temperature of the outer wall of the tube 210. In a preferred aspect, the temperature sensor can be a thermal couple. In FIG. 2, the whole system is disposed in an appropriate isolation apparatus 230 for preventing operators of the system from being hurt by spilling reaction solution 216.

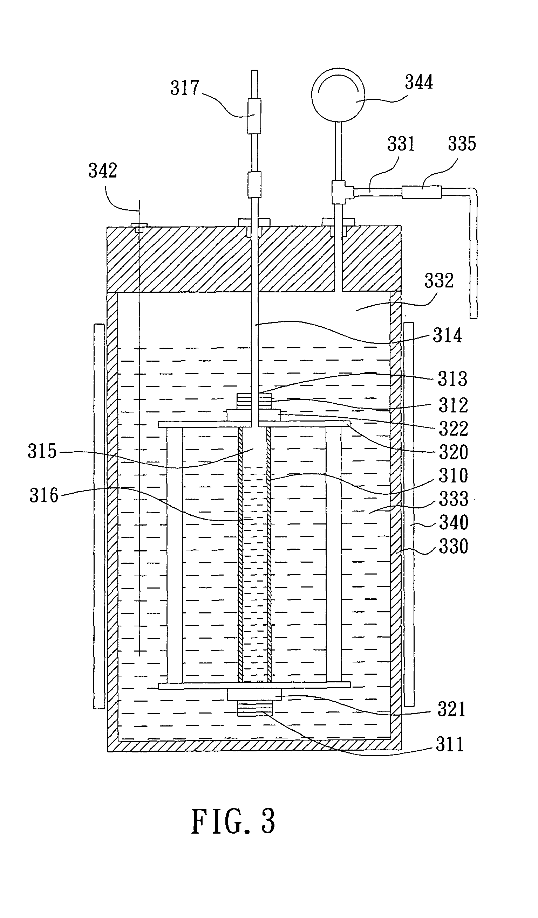

Please refer to FIG. 3, which is a schematic diagram showing a system for producing stress corrosion cracking according to a second preferred embodiment of the present invention. The tube 310 can be substantially an Inconel 600 nickel alloy tube, which is sealed by two plugs 311, 312 respectively welded at the bottom opening and the top opening of the tube 310, wherein the two plugs 311, 312 are made of a material the same as that of the tube 310. As seen in FIG. 3, a through hole 313 is formed on the plug 212 so that a tube with smaller diameter 314 can be inserted into the through hole 313 while tightly connected to the same. As the tube 310 is connected to the tube 314 by inserting the tube 314 into the through hole 313, an enclosed space 315 is formed inside the tube 310, which is used to accommodate a reaction solution 316 for facilitating stress corrosion cracks to form on the inner wall of the tube 310. In a preferred aspect, the reaction solution 216 can be a strong alkali solution, which can be formed by adding 300 grams of *Cu₂O* per liter in a 40 % NaOH solution. Furthermore, a pressure relief device 317 is arranged at the tube 314, that is used to rapidly release the internal pressure of the tube 310 so as to prevent the rupture of the tube 310. It is noted that the rupture disc, being substantially a rupture disc, can break automatically while the internal pressure of the tube 310 exceeds a specific limit so that the internal pressure of the tube is decreased.

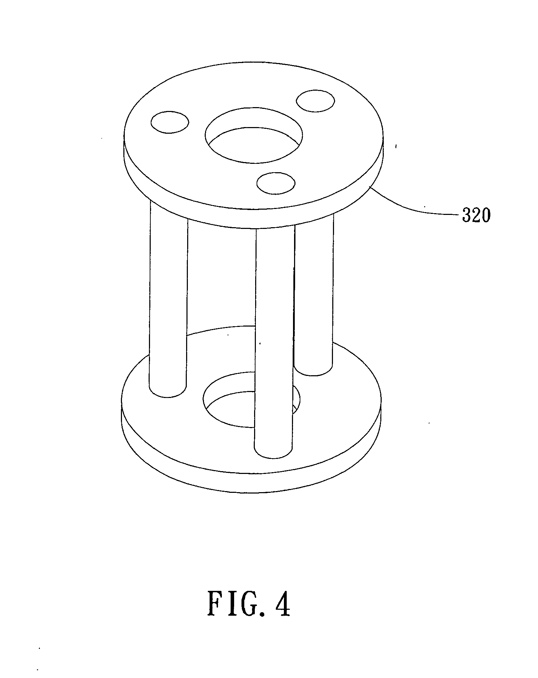

The fixing apparatus 320 of FIG. 3 is capable of fixing the tube 310 while exerting an axial stress on the same. As seen in FIG. 3 and FIG. 4, the fixing apparatus 320 further comprises a fixation frame and a locking device, being substantially the two bolts 321, 322, as shown in FIG. 4, wherein the fixation frame is used to fix and fasten the tube 310; and the two bolts 321, 322 can be screwed to fasten on the two plug 311, 312 in respective while pressing on the tube 310 for exerting an axial stress thereon.

Furthermore, as a tank 330 is connected to a tube 331, an enclosed space 332 is formed inside the tube 330, which is used to accommodate a reaction solution 333. In a preferred aspect, the reaction solution 333 can be a deionized water while the tank 330 is a stainless steel tank capable of resisting high temperature and high pressure. In addition, a pressure relief device 335 and a pressure gauge 334 are arranged at the tube 331, that the pressure gauge 334 is used to measure the internal pressure of the tank 330, while the pressure relief device 335 is used to rapidly release the internal pressure of the tank 330 so as to prevent the rupture of the tank 330. It is noted that the pressure relief device 335, being substantially a rupture disc, can break automatically while the internal pressure of the tank 330 exceeds a specific limit so that the internal pressure of the tank 330 is decreased.

The heating apparatus 340 of FIG. 3, being arranged at a location outside the tank 330, is comprised of a temperature controller and a temperature sensor 342, wherein the temperature controller is capable of controlling the temperature of the outer wall of the tube 310 for maintaining the same at the first operating temperature, i.e. about 300 °C; and the temperature sensor 342 is used to measure the temperature of the reaction solution 333. In a preferred aspect, the temperature sensor 332 can be a thermal couple.

As the reaction solution 333 is heated by the heating apparatus 340 until it reaches and maintains at a second operating temperature, i.e. about 300 °C, the internal pressure of the tank 330 is increased with the raising of the internal temperature of the tank 330 since the volume enclosed inside the tank 330 remain unchanged during the heating, such that the internal pressure of the tank 330 will reach and maintain at a second operating pressure, i.e. about 1250 psi, while the temperature of the reaction solution is maintained at the second operating temperature. It is noted that as the raising of the temperature of the reaction solution 333, the temperature of the tube 310 is raised correspondingly. Since the volume enclosed inside the tube 310 remain unchanged during the heating, the internal pressure of the tube 310 is increased with the raising of the internal temperature of the tube 310, such that the internal pressure of the tube 310 will reach and maintain at a first operating pressure, i.e. about 400 psi, while the temperature of the tube is maintained at the first operating temperature. Under the circumstance, as the tube 310 is also subjecting to an axial stress the same time as the inner and outer walls of the tube 310 are subjected to a pressure difference and temperature difference temperature, certain circumferential crevices are formed on the tube 210.

In general, the system of the present invention is capable of simulating the formation of stress corrosion cracking on a tube specimen so as to use the simulation result for establishing an accurate calibration curve, such that a more accurate experimental data can be obtained for achieving a better evaluation and measurement of crevices formed on the inner wall of a tube.

While the preferred embodiment of the invention has been set forth for the purpose of disclosure, modifications of the disclosed embodiment of the invention as well as other embodiments thereof may occur to those skilled in the art. Accordingly, the appended claims are intended to cover all embodiments which do not depart from the spirit and scope of the invention.

## Claims

1. A system for producing stress corrosion cracking, comprising:
a tube, having a first enclosed space formed therein for receiving a first reaction solution; and
a heating apparatus, capable of heating the tube continuously until the outer wall of the tube reaches and maintains at a first operating temperature;
wherein, the inner wall of the tube is subjecting to a first operating pressure while the outer wall of the tube is maintaining at the first operating temperature by the heating apparatus.

2. The system of claim 1, wherein the first enclosed space is formed as the tube is connected to a first tube.

3. The system of claim 1, wherein a protective means is arranged between the tube and the heating apparatus while enabling outside of the tube to be wrapped thereby.

4. The system of claim 1, wherein the heating apparatus further comprises:
a temperature controller, capable of controlling the temperature of the outer wall of the tube for maintaining the same at the first operating temperature; and
a temperature sensor, used to measure the temperature of the outer wall of the tube.

5. The system of claim 1, wherein the first operating temperature is about 350 °C while the first operating pressure is about 1200 psi.

6. A system for producing stress corrosion cracking, comprising:
a tube, having a first enclosed space formed therein for receiving a first reaction solution;
a tank, having a second enclosed space formed therein for receiving a second reaction solution;
a fixing apparatus, for fixing the tube while exerting an axial stress on the same; and
a heating apparatus, capable of heating the tank continuously until the outer wall of the tube reaches and maintains at a first operating temperature;
wherein, the inner walls of the tube and the tank are respectively subjecting to a first and a second operating pressures while the outer wall of the tube is maintaining at the first operating temperature by the heating apparatus.

7. The system of claim 6, wherein the first enclosed space is formed as the tube is connected to a first tube; and the second enclosed space is formed as the tank is connected to a second tube.

8. The system of claim 6, wherein the heating apparatus further comprises:
a temperature controller, capable of controlling the temperature of the outer wall of the tube for maintaining the same at the first operating temperature; and
a temperature sensor, used to measure the temperature of the second reaction solution.

9. The system of claim 6, wherein the fixing apparatus further comprises:
a fixation frame, used to fix and fasten the tube; and
a locking device, used to press on the tube for exerting an axial stress thereon.

10. The system of claim 6, wherein the second reaction solution is a deionized water.

11. The system of claim 6, wherein the first operating temperature is about 300 °C; the first operating pressure is about 400 psi; and the second operating pressure is about 1250 psi.

## Amended claims

### Amended claims in accordance with Rule 137(2) EPC.

**1.** A system for producing stress corrosion cracking, comprising:
a tube (310), having a first enclosed space (315) formed therein for receiving a first reaction solution (316);
a tank (330), having a second enclosed space (332) formed therein for receiving a second reaction solution (333) or a deionized water, the tube being arranged at a location inside the tank;
a fixing apparatus (320), for fixing the tube while exerting an axial stress on the same; and
a heating apparatus (340), capable of heating the tank (330) continuously until the outer wall of the tube reaches and maintains at a first operating temperature;
wherein the system is operable so that the inner walls of the tube and the tank are respectively subjecting to a first and a second operating pressures while the outer wall of the tube is maintaining at the first operating temperature by the heating apparatus (340),
**characterized**
**by** the second reaction solution (333) or the deionized water being accommodated in the second enclosed space (332), and by the heating apparatus (340) being arranged at a location outside the tank (330) and being operable to heat the reaction solution or the deionised water and to raise the temperature of the outer wall of the tube (310) correspondingly to the first operating temperature.

**2.** The system of claim 1 **characterized by** a first (314) and a second tube (331), wherein the tube (310) is connected with the first tube (314), whereby the first enclosed space (315) is formed inside the tube (310); and wherein the tank (330) is connected to the second tube (331), whereby the second enclosed space (332) is formed inside the tank (330).

**3.** The system of claim 1, wherein the heating (340) apparatus further comprises:
a temperature controller, capable of controlling the temperature of the outer wall of the tube for maintaining the same at the first operating temperature; and
a temperature sensor, used to measure the temperature of the second reaction solution and/or the temperature of the outer wall of the tube.

**4.** The system of claim 1, wherein the fixing apparatus (320) further comprises:
a fixation frame, used to fix and fasten the tube; and
a locking device, used to press on the tube for exerting an axial stress thereon.

**5.** Method for producing stress corrosion cracking, preferably with the system according to one of the preceding claims, comprising the steps of: accommodating a first reaction solution (316) in a tube (310); accommodating a second reaction solution (333) or deionized water in a tank (330), the tube (310) being arranged inside the tank (330); fixing the tube (310) and exerting an axial stress on the tube (310) with a fixing apparatus (320); heating the tank (330) continuously with an heating apparatus (340) until the outer wall of the tube reaches and maintains at a first operating temperature, the heating apparatus (340) being arranged outside the tank (330); wherein, the inner walls of the tube (310) and the tank are respectively subjecting to a first and a second operating pressures while the outer wall of the tube (310) is maintaining at the first operating temperature by the heating apparatus.

**6.** The method of claim 5, wherein the first operating temperature is 300 °C; the first operating pressure is 28 bar (400 psi); and the second operating pressure is 86 bar (1250 psi).
